# EUROPÄISCHE PATENTSCHRIFT

(11) **EP 0 826 479 B1**
(45) Veröffentlichungstag und Bekanntmachung des Hinweises auf die Patenterteilung: **27.06.2001**
(21) Anmeldenummer: 97108206.0
(22) Anmeldetag: 21.05.1997
(51) Int. Cl.: B29C 51/10, B29C 51/26

(54) **Thermoformwerkzeug**
Hot forming tool
Outil pour le formage à chaud

(30) Priorität: 28.08.1996 DE 19634747
(43) Veröffentlichungstag der Anmeldung: 04.03.1998
(73) Patentinhaber: FRIMO GmbH & Co. KG, 49504 Lotte (DE)
(72) Erfinder: Bayer, Hans-Günter, 49205 Hasbergen (DE); Denker, Ernst, 49492 Westerkappeln (DE)

(56) Entgegenhaltungen:
- EP-A- 0 683 030
- DE-C- 3 613 879
- DE-C- 3 704 528

## Beschreibung

Die Erfindung betrifft ein Thermoformwerkzeug für ein in einem Spannrahmen gehaltenes, thermisch erweichtes Flächengebilde mit zumindest einer Naht, umfassend einen Formkörper, der eine reliefartig strukturierte, durch zumindest eine Leiste unterbrochene Formfläche aufweist, sowie eine Einrichtung, durch die das Flächengebilde an die Formfläche annäherbar und anformbar ist, wobei Mittel zum Ergreifen und zur Annäherung des Flächengebildes im Bereich der Naht vorgesehen sind, die es gestatten, diesen Bereich des Flächengebildes parallel oder dem übrigen Flächengebilde voreilend an die Formfläche anzunähern und an die Leiste anzuformen.

Ein solches Thermoformwerkzeug ist aus der DE-A 36 13 879 bekannt. Es gelangt bei der Herstellung tiefgezogener Folien zur Anwendung, die Verwendung bei der Herstellung von Polsterteilen finden und gewöhnlich nachfolgend mit einem Träger versehen und mit einem Kunstharz, beispielsweise mit Polyurethan, hinterschäumt werden. Ihre Oberfläche ist aus geschmacklichen Gründen im allgemeinen mit einer lederähnlichen Narbung versehen. Die Farben sind entsprechend ausgewählt.

Armaturentafeln sind im oberen Bereich aus Blendschutzgründen mit wesentlich weiter vorstehenden Vorsprüngen und Kanten versehen als im unteren Bereich. Die sich beim Tiefziehen einer Folie ergebenden Querschnittsschwächungen treten an diesen Stellen besonders deutlich in Erscheinung. Die Dicke der insgesamt zur Anwendung gelangenden Folie wird dadurch maßgeblich durch die Ausbildung solcher Vorsprünge bestimmt, die im Bereich der Unterseite völlig fehlen. Bezogen auf die Erfordernisse, die sich im unteren Bereich einer Armaturentafel ergeben, bedeutet das nichts anderes als eine Materialverschwendung.

Es ist bereits bekannt, im oberen Teil und im unteren Teil einer Armaturentafel Bezugsstoffe zu verwenden, die voneinander abweichend ausgebildet sind. Dabei muß aber der Nachteil in Kauf genommen werden, daß die beiden Bezugsstoffe unabhängig voneinander tiefgezogen werden müssen, was es erfordert, sie noch vor der Hinterschäumung in bereits reliefartig verformtem Zustand flüssigkeitsdicht miteinander zu verbinden. Der Vorteil der Werkstoffersparnis, der hinsichtlich der Ausbildung des im unteren Bereich zur Anwendung gelangenden Flächengebildes genutzt werden könnte, steht dazu in keinerlei Verhältnis. Auch ist es häufig schwierig, erst am Fertigteil erkennbare Falten und Verzerrungen im Bereich der Naht zu vermeiden. Der Armaturentafel läßt sich jedoch durch die Verwendung eines von der Oberseite abweichenden Bezugstoffes im Bereich der Unterseite ein individuelleres Erscheinungsbild verleihen, was unter modischen Aspekten erwünscht ist.

Mit der eingangs beschriebenen Vorrichtung läßt sich ein Bezug tiefziehen, der aus mehreren Bezugsteilen besteht. Die einzelnen Bezugsteile sind dabei durch ein streifenförmiges Element verbunden, was es gestattet, den Bezug im Bereich des streifenförmigen Elementes mittels einer Zange zu ergreifen und diese Zone dem übrigen Flächengebilde voreilend an die Formfläche anzunähern und an die Formfläche anzuformen.

Der Erfindung liegt die Aufgabe zugrunde, ein Thermoformwerkzeug zu zeigen, das es gestattet, das zu verformende Flächengebilde auch dann im Bereich einer Naht sicher zu ergreifen und präzise in der Formfläche zu positionieren, wenn die einander an der Naht berührenden Teile des Flächengebildes ein stark voneinander abweichendes Dehnungsverhalten haben oder wenn die Naht innerhalb der Formfläche an einer stark hinterschnittenen oder verdeckten Stelle positioniert werden muß.

Diese Aufgabe wird erfindungsgemäß bei einem Thermoformwerkzeug der eingangs genannten Art durch die kennzeichnenden Merkmale von Anspruch 1 gelöst. Auf vorteilhafte Ausgestaltungen nehmen die abhängigen Ansprüche bezug.

Bei dem erfindungsgemäßen Thermoformwerkzeug ist es vorgesehen, daß die Mittel zusätzlich in zumindest einer sich quer zur Absenkrichtung erstreckenden Richtung verschiebbar sind. Hierdurch ist es möglich, das erweichte Flächengebilde leichter im Bereich der Naht zu erfassen, beispielsweise nach vorausgegangener Aufblähung durch ein von unten angreifendes Luftpolster, und diese Zone noch vor oder parallel zu dem Absenken des übrigen Flächengebildes in die richtige Position zu überführen, bezogen auf die Lage der Leiste in der Formfläche. Die Ausführung kann unverzichtbar sein, wenn die einander an der Naht berührenden Teile des Flächengebildes ein stark voneinander abweichendes Dehnungsverhalten haben oder wenn die Naht innerhalb der Formfläche an einer stark hinterschnittenen oder verdeckten Stelle positioniert werden muß. Die Mittel können einen Bestandteil eines oberhalb des Flächengebildes angeordneten Werkzeugs, insbesondere eines Niederhalters, bilden. Sie gestatten es, die Naht parallel oder dem übrigen Flächengebilde voreilend an die Formfläche anzunähern und an die Leiste anzuformen. Dabei knüpft die Erfindung an an die Beobachtung, daß der obere und der untere Teil einer Armaturentafel eines Kraftfahrzeuges gewöhnlich durch eine Blende in optischer Hinsicht getrennt sind, die sich etwa im mittleren Teil der Armaturentafel befindet. Sie eignet sich in optimaler Weise, um die Lage der Naht in dem fertigen Formteil zu verdecken. Da es die Erfindung ermöglicht, die Naht an einer sehr präzisen definierten Stelle vorzusehen, kann die Blende gegebenenfalls sehr schmal gestaltet werden und beispielsweise aus einem farbigen oder reflektierenden Band bestehen. Dennoch ist es möglich, im Bereich der Ober- und im Bereich der Unterseite der Armaturentafel voneinander abweichend ausgebildete Folien oder Bezugsstoffe zur Anwendung zu bringen, beispielsweise Folien, die sich durch eine unterschiedliche Dicke und oder Einfärbung voneinander unterscheiden.

Unter der Leiste wird im Rahmen der vorliegenden Erfindung eine zwei- oder dreidimensional konturierte Linie verstanden, die die Oberfläche des gebrauchsfertigen Formteils in optisch getrennte Zonen unterteilt. Sie ist zumeist durch eine Zierleiste verdeckt. Die betreffende Stelle kann in der Formfläche des Formkörpers durch eine Nut, eine Erhebung oder eine ebene Fläche markiert sein.

Die zu verformenden Flächengebilde, beispielsweise Folien, werden dem Thermoformprozeß vorausgehend im Bereich ihrer Seitenränder verbunden, d.h. zu einem Zeitpunkt, zu welchem sie noch in ebener Gestalt vorliegen. Die Durchführung der gegenseitigen Verbindung ist dadurch stark vereinfacht. Sie kann sich des gegenseitigen Vernähens, Verklebens und/oder Verschweißens bedienen. Solche Verfahren sind dem Fachmann vertraut und ergeben sich maßgeblich aus der Art der zu verarbeitenden Werkstoffe. Auch hinsichtlich der gegenseitigen Abdichtung und Vermeidung von gegenseitigen Verzerrungen der Teil-Flächengebilde im Bereich der Naht bestehen bei der Herstellung einer Verbindung im ebenen Zustand wesentlich geringere Schwierigkeiten als im Anschluß an eine vorausgegangene Verformung. Der Umfang der hierdurch bedingten Ausschußquote ist dadurch deutlich reduziert.

Die Mittel können aus der Formfläche anhebbar und in diese absenkbar ausgebildet sein. Sie bilden bei einer solchen Ausführung einen Bestandteil des Formkörpers, was den Werkzeugwechsel vereinfacht, weil nur der Formkörper allein ausgetauscht zu werden braucht und es entbehrlich ist, anschließend eine neue Justierung der Mittel zum Ergreifen des Flächengebildes an oder im Bereich der Naht vorzunehmen.

Die Mittel zum Ergreifen des Flächengebildes im Bereich der Naht können beispielsweise durch eine Ansaugeinrichtung, eine Greifeinrichtung und /oder eine Klemmeinrichtung gebildet sein. Es ist beispielsweise möglich, daß das in der Formfläche versenkbare Mittel mit einem Gegenhalter zusammenwirkt, der von der gegenüberliegenden Seite mit dem thermisch erweichten Flächengebilde in Eingriff bringbar ist, wodurch dieses zwischen dem Gegenhalter und dem Mittel eingespannt wird und nachfolgend dem übrigen Flächengebilde vorauseilend in Richtung der Formfläche verlagerbar ist.

Als vorteilhaft hat es sich erwiesen, wenn die Bewegungen der Mittel und des Spannrahmens aufeinander abgestimmt sind, beispielsweise der Gestalt, daß die Mittel nur bei angehobenem Spannrahmen aus der Formfläche anhebbar ist und daß die Mittel parallel zu dem Spannrahmen in die Formfläche absenkbar ist. Hierdurch wird sichergestellt, daß die Naht innerhalb der Formfläche an einer präzise vorherbestimmten Stelle fixiert wird, bevor die übrigen Teile des erweichten Flächengebildes mit der Formfläche in Eingriff gelangen. Es kann jedoch bei großen Hinterschneidungen der Formfläche erforderlich sein, die Mittel mit einer Voreilung vor dem Spannrahmen an die Formfläche anzunähern, was nach einer weiteren Ausgestaltung vorgesehen ist. Die Voreilung kann dabei in Abhängigkeit von den im speziellen Anwendungsfall gegebenen Erfordernissen auf bestimmte Werte einstellbar sein. Die dazu erforderlichen Parameter lassen sich im Zuge von Versuchen ermitteln. Auch in schwierigen Fällen läßt sich so eine präzise Positionierung der Naht im gebrauchsfertigen Formteil erreichen.

Die Erfindung wird nachfolgend anhand der Zeichnung weiter verdeutlicht. Es zeigen:
- Fig. 1: ein Formwerkzeug, bei dem die Mittel zum Ergreifen des Flächengebildes im Bereich der Naht einen Bestandteil eines oberhalb des Flächengebildes angeordneten Niederhalters bilden, wobei sich das unverformte, thermisch erweichte Flächengebilde bereits oberhalb des Formwerkzeugs befindet.

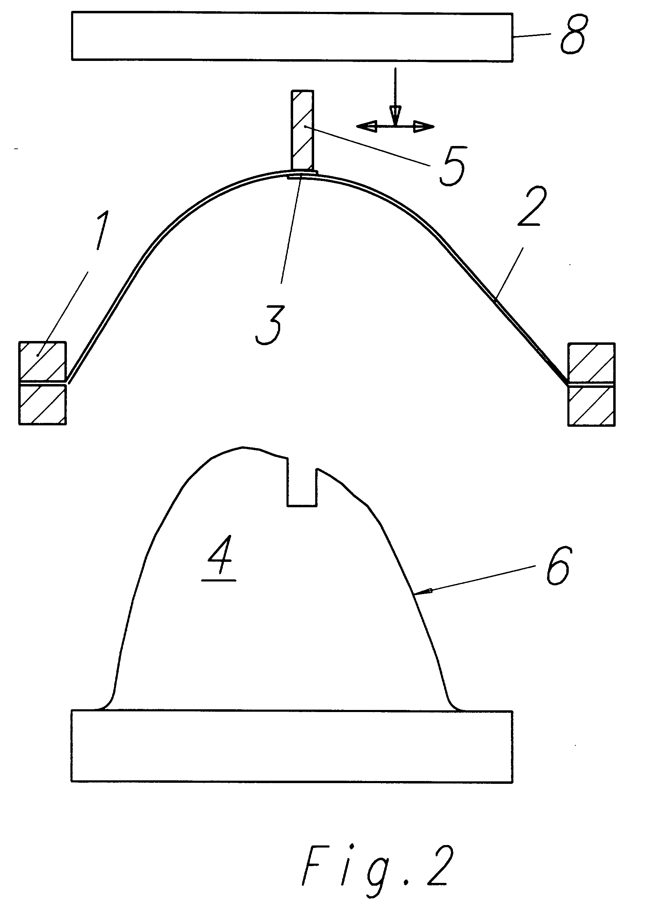

- Fig. 2: das Thermoformwerkzeug nach Fig. 1 in einem Zustand, in dem das Flächengebilde durch ein von unten angreifendes Luftpolster im zentralen Bereich angehoben wurde und die Mittel zum Ergreifen der Naht durch eine Querverschiebung und Absenkung mit der Naht in Eingriff gebracht worden sind.
- Fig. 3: das Thermoformwerkzeug nach den Fig. 1 und 2 in einem Zustand, in dem die die Naht aufweisende Zone des Flächengebildes an der Stelle der Leiste mit der Formfläche in Eingriff gebracht und das übrige Flächengebilde an die Formfläche angeformt worden ist.

Das in der Zeichnung gezeigte Thermoformwerkzeug dient zur Verformung eines in einem Spannrahmen 1 festgehaltenen, thermisch erweichten Flächengebildes aus zumindest zwei nebeneinander liegenden Bahnen, die im Bereich der Seitenränder durch eine Naht 3 miteinander verbunden sind.

Die Naht kann z.B. als Klebe-, Schweiß- oder Maschinennaht ausgebildet sein. Die benachbarten Bahnen können sich in ihrem Bereich stumpf berühren oder überlappen. Eine Verwendung zweifarbig extrudierter Folien ist ebenfalls möglich.

Die Naht kann jedoch auch eine Scheinnaht sein und beispielsweise durch diejenige Stelle einer einteiligen Folie gebildet sein, an der unterschiedlich eingefärbte oder genarbte Zonen einander berühren.

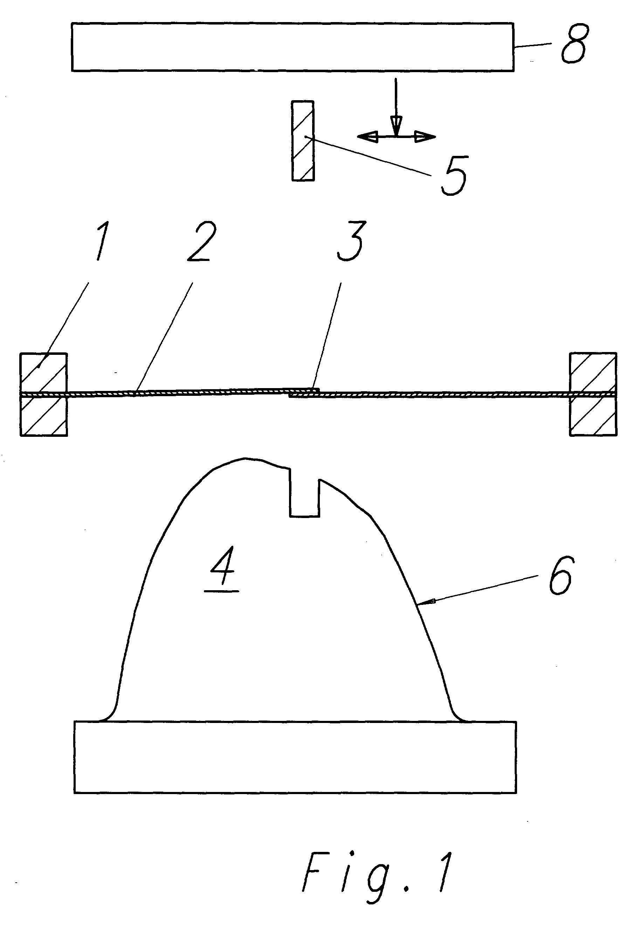

Das zur Anwendung gelangende Thermoformwerkzeug ist in üblicher Weise mit einer Heizeinrichtung für das in einem Spannrahmen 1 festgehaltene, zu verformende Flächenbilde versehen, die in der Zeichnung nicht gezeigt ist. Die Wärmequelle kann außerhalb des Bereichs des Thermoformwerkzeuges angeordnet sein und beispielsweise einen Infrarotstrahler umfassen, in dessen Einwirkungsbereich der das Flächengebilde haltende Spannrahmen hineinbewegbar ist. Das aus einem thermisch erweichbaren Werkstoff bestehende Flächengebilde wird nach Erreichen einer genügend hohen Temperatur durch Verschieben des Spannrahmens 1 in die in Fig. 1 gezeigte Lage oberhalb des Formwerkzeuges gebracht, das eine durch zumindest eine Nut unterbrochene Formfläche 6 aufweist.

Oberhalb der Nut sind Mittel 5 zum Ergreifen des Flächengebildes 2 im Bereich der Naht 3 vorgesehen, die einen Bestandteil eines oberhalb des Flächengebildes 2 angeordneten Niederhalters 8 bilden, wobei sich das noch unverformte, thermisch erweichte Flächengebilde 2 bereits oberhalb des Formkörper 4 befindet. Die Mittel 5 bestehen aus einer Schiene, die senkrecht und in Querrichtung verschiebbar ist und nach unten geöffnete Ansaugöffnungen aufweist. Statt der Ansaugöffnungen kann auch eine Greifeinrichtung und/oder einer Klemmeinrichtung zur Anwendung gelangen. Die Schiene ist dadurch geeignet, nach Anlegen an die Naht 3 zu dieser eine kraftschlüssige Verbindung herzustellen.

Die Schiene kann außerdem mit Sensoren zur Ermittlung der Naht 3 versehen sein und während der bestimmungsgemäßen Verwendung durch die Sensoren zu der Naht 3 hingeführt werden, um das Flächengebilde gezielt an dieser Stelle zu ergreifen. Demgegenüber genügt in vielen Fällen eine empirisch ermittelte Steuerung der unter Verwendung der tatsächlich zu verformenden Flächengebilde 2, wenn diese aufeinanderfolgend in gleicher Form zur Anwendung gelangen und ein übereinstimmendes Dehnungsverhalten haben, was bei standardisierten Produkten üblicherweise der Fall ist.

Wird das Mittel 5 nachfolgend in der Nut der Formfläche 6 versenkt, dann folgt die Naht 3 der betreffenden Bewegung und gelangt auf diese Weise innerhalb der Formfläche 6 an einer Stelle zur Ablage, die präzise vorherbestimmbar ist und bevor die übrigen Teile des Flächengebildes mit der Formfläche 6 in Eingriff gelangen.

Im Anschluß an das Absenken der Schiene wird der Spannrahmen über die Formfläche 6 gestülpt und nach unten abgesenkt, wobei das Flächengebilde 2, ausgehend von der Stelle der Naht 3, fortschreitend in Eingriff mit der Formfläche 6 gelangt. Das Einfahren der Schiene und das Überstülpen des Spannrahmens kann in Abhängigkeit von den im speziellen Anwendungsfall gegebenen Erfordernissen auch gleichzeitig erfolgen. Der diesbezügliche Prozeß des Anformens läßt sich begünstigen durch Anlegen eines Vakuums an die Ansaugöffnungen 7, die die Formfläche an kritischen Stellen durchdringen. Ergänzend und/oder alternativ läßt sich die Außenseite des Flächengebildes mit Druckluft beaufschlagen, um eine gute Anformung auch an kritische Stellen der Formfläche 6 zu gewährleisten.

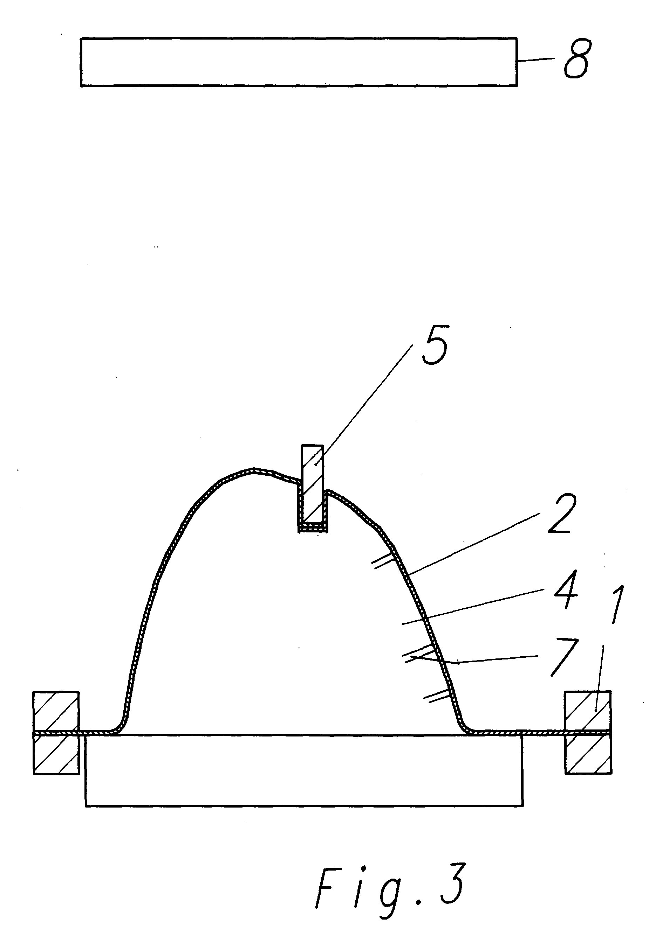

Die schließlich erreichte Lage und Gestalt des Flächengebildes 2 wird in Fig. 3 gezeigt. Sie wird durch Abkühlung des aus einem thermisch erweichbaren Werkstoff bestehenden Flächengebildes 2 bleibend fixiert. Dieses kann nachfolgend von der Formfläche 6 entnommen, im Bereich des Randes beschnitten und seiner bestimmungsgemäßen Verwendung zugeführt werden.

Anstelle einer Schiene von langgestreckter Gestalt können auch abweichend gestaltete Mittel zur Anwendung gelangen, beispielsweise ein oder mehrere Einzelgreifer, die das Flächengebilde im Sinne der vorstehenden Darlegungen im Bereich der Naht zu ergreifen und an die Formfläche anzulegen vermögen.

## Patentansprüche

1. Thermoformwerkzeug für ein in einem Spannrahmen (1) gehaltenes, thermisch erweichtes Flächengebilde (2) mit zumindest einer Naht (3), umfassend einen Formkörper (4), der eine reliefartig strukturierte, durch zumindest eine Leiste unterbrochene Formfläche (6) aufweist, sowie eine Einrichtung, durch die das Flächengebilde (2) an die Formfläche (6) annäherbar und anformbar ist, wobei Mittel (5) zum Ergreifen und zur Annäherung des Flächengebildes (2) im Bereich der Naht (3) vorgesehen sind, die es gestatten, diesen Bereich des Flächengebildes (2) parallel oder dem übrigen Flächengebilde (2) voreilend an die Formfläche (6) anzunähern und an die Leiste anzuformen, dadurch gekennzeichnet, daß die Mittel (5) zusätzlich in zumindest einer sich quer zur Absenkrichtung erstreckenden Richtung verschiebbar sind.

2. Thermoformwerkzeug nach Anspruch 1, dadurch gekennzeichnet, daß die Mittel (5) aus der Formfläche (6) anhebbar und in diese absenkbar ausgebildet sind.

3. Thermoformwerkzeug nach Anspruch 1, dadurch gekennzeichnet, daß die Mittel (5) einen Bestandteil eines oberhalb des Flächengebildes (2) angeordneten Werkzeugs, insbesondere eines Niederhalters (8), bilden.

4. Thermoformwerkzeug nach einem der Ansprüche 1 bis 3, dadurch gekennzeichnet, daß die Mittel (5) eine Ansaugeinrichtung und/oder eine Klemmeinrichtung für die Naht (3) umfassen.

5. Thermoformwerkzeug nach einem der Ansprüche 1 bis 4, dadurch gekennzeichnet, daß die Mittel (5) nur bei angehobenem Spannrahmen (1) mit dem Flächengebilde (2) in Eingriff bringbar sind.

6. Thermoformwerkzeug nach einem der Ansprüche 1 bis 5, dadurch gekennzeichnet, daß die Mittel (5) mit einer Voreilung vor dem Spannrahmen (1) an die Formfläche (6) annäherbar sind, und die Voreilung der Mittel (5) einstellbar ist.

## Claims

1. A thermoforming tool for a thermally softened sheet-like article (2) held in a clamping frame (1) and having at least one seam (3), comprising a forming body (4), which has a forming surface (6) with a relief-like structure and interrupted by at least one strip, and a device by means of which the sheet-like article (2) can be brought closer to the forming surface (6) and formed thereon, means (5) for seizing the sheet-like article (2) and bringing it closer in the region of the seam (3) being provided, these means (5) allowing this region of the sheet-like article (2) to be brought closer to the forming surface (6) in parallel or in advance of the rest of the sheet-like article (2) and to be integrally formed on the strip, characterized in that the means (5) are additionally displaceable in at least one direction extending transversely to the lowering direction.

2. A thermoforming tool according to claim 1, characterized in that the means (5) are designed such that they can be lifted out of the forming surface (6) and can be lowered into the latter.

3. A thermoforming tool according to claim 1, characterized in that the means (5) form a component of a tool, in particular a hold-down (8), arranged above the sheet-like article (2).

4. A thermoforming tool according to any one of claims 1 to 3, characterized in that the means (5) contain a suction device and/or a clamping device for the seam (3).

5. A thermoforming tool according to any one of claims 1 to 4, characterized in that the means (5) can be brought into engagement with the sheet-like article (2) only when the clamping frame (1) is raised.

6. A thermoforming tool according to any one of claims 1 to 5, characterized in that the means (5) can be brought closer to the forming surface (6) in advance of the clamping frame (1), and the advance of the means (5) can be set.

## Revendications

1. Outil pour le formage à chaud d'un produit plan (2) ramolli thermiquement et tenu dans un cadre de serrage (1) avec au moins un joint (3), comprenant un corps de formage (4) qui présente une surface de formage (6) structurée en relief et interrompue par au moins une nervure, ainsi qu'un dispositif grâce auquel le produit plan (2) peut être rapproché de la surface de formage (6) et formé sur elle, des moyens (5) étant prévus pour saisir et rapprocher le produit plan (2) dans la partie du joint (3), qui permettent de rapprocher cette partie du produit plan (2), parallèlement ou en avance par rapport au reste du produit plan (2), de la surface de formage et de la former sur la nervure, caractérisé en ce que les moyens (5) peuvent en outre être déplacés dans au moins un sens s'étendant perpendiculairement au sens de descente.

2. Outil pour le formage à chaud selon la revendication 1, caractérisé en ce que les moyens (5) sont réalisés de manière à pouvoir être soulevés pour sortir de la surface de formage (6) et être descendus dans celle-ci.

3. Outil pour le formage à chaud selon la revendication 1, caractérisé en ce que les moyens (5) forment une partie constitutive d'un outil disposé au-dessus du produit plan (2), en particulier d'un serre-flan (8).

4. Outil pour le formage à chaud selon l'une des revendications 1 à 3, caractérisé en ce que les moyens (5) comprennent un dispositif d'aspiration et/ou un dispositif de serrage pour le joint (3).

5. Outil pour le formage à chaud selon l'une des revendications 1 à 4, caractérisé en ce que les moyens (5) ne peuvent être mis en prise avec le produit plan (2) que lorsque le cadre de serrage (1) est soulevé.

6. Outil pour le formage à chaud selon l'une des revendications 1 à 5, caractérisé en ce que les moyens (5) peuvent être rapprochés de la surface de formage (6) avec une avance par rapport au cadre de serrage (1) et en ce que l'avance des moyens (5) est réglable.
